# EUROPEAN PATENT APPLICATION

(11) **EP 4 201 860 A1**
(43) Date of publication of application: **28.06.2023**
(21) Application number: 22211241.9
(22) Date of filing: 02.12.2022
(51) Int. Cl.: B66B 1/46

(54) **TOUCHLESS ELEVATOR COMMUNICATION SYSTEM**

(30) Priority: 22.12.2021 US 202117559663
(71) Applicant: Otis Elevator Company, Farmington CT 06032-2568 (US)
(72) Inventor: WONG, Thieu Sam, Farmington, 06032 (US)
(74) Representative: Dehns

(57) **Abstract**

A method of operating an elevator system using a touchless elevator communication system (200) including: generating a first two-dimensional sensor curtain using a first sensor curtain generation device (212a), the first two-dimensional sensor curtain being located in front of a display (250) that displays one or more selection options (251); generating a second two-dimensional sensor curtain using a second sensor curtain generation device (212b) located in front of the first two-dimensional sensor curtain, the first two-dimensional sensor curtain being located between the second two-dimensional sensor curtain and the display (250); detecting the object (192) in the second two-dimensional sensor curtain; determining a second curtain location of the object (192) in the second two-dimensional sensor curtain; mapping the second curtain location of the object (192) in the second two-dimensional sensor curtain to a selection option (251) of the one or more selection options (251); and identifying on the display (250) that the object (192) is pointing to the selection option (251).

## Description

### BACKGROUND

The subject matter disclosed herein relates generally to the field of elevator systems, and specifically to a method and apparatus communication with an elevator system via touchless interface.

Elevator systems are typically only able to generate an elevator call based on an individual manually entering an elevator call on an elevator call button in a wall next to an elevator bank that requires the passenger touching the elevator call button.

### BRIEF SUMMARY

According to an embodiment, a method of operating an elevator system using a touchless elevator communication system is provided. The method including: generating a first two-dimensional sensor curtain using a first sensor curtain generation device, the first two-dimensional sensor curtain being located in front of a display that displays one or more selection options for control of the elevator system; generating a second two-dimensional sensor curtain using a second sensor curtain generation device, the second two-dimensional sensor curtain being located in front of the first two-dimensional sensor curtain, the first two-dimensional sensor curtain being located between the second two-dimensional sensor curtain and the display; detecting the object in the second two-dimensional sensor curtain; determining a second curtain location of the object in the second two-dimensional sensor curtain; mapping the second curtain location of the object in the second two-dimensional sensor curtain to a selection option of the one or more selection options; and identifying on the display that the object is pointing to the selection option.

In addition to one or more of the features described herein, or as an alternative, further embodiments may include detecting the object in the first two-dimensional sensor curtain; determining a first curtain location of the object in the first two-dimensional sensor curtain; mapping the first curtain location of the object in the first two-dimensional sensor curtain to the selection option of the one or more selection options; confirming that the selection option is correct based on the first curtain location and the second curtain location being mapped to the selection option; and transmitting the selection option to a dispatcher of the elevator system, wherein the dispatcher is configured to command operation of an elevator car of the elevator system in accordance with the selection option.

In addition to one or more of the features described herein, or as an alternative, further embodiments may include moving the elevator car in accordance with the selection option.

In addition to one or more of the features described herein, or as an alternative, further embodiments may include opening an elevator door of the elevator car in accordance with the selection option.

In addition to one or more of the features described herein, or as an alternative, further embodiments may include closing an elevator door of the elevator car in accordance with the selection option.

In addition to one or more of the features described herein, or as an alternative, further embodiments may include activating an alarm of the elevator system in accordance with the selection option.

In addition to one or more of the features described herein, or as an alternative, further embodiments may include that prior to detecting the object in the first two-dimensional sensor curtain, the method further includes: instructing a passenger to move the object closer to the display and through the first two-dimensional sensor curtain.

In addition to one or more of the features described herein, or as an alternative, further embodiments may include that identifying on the display that the object is pointing to the selection option further includes: placing a curser on the selection option.

In addition to one or more of the features described herein, or as an alternative, further embodiments may include that identifying on the display that the object is pointing to the selection option further includes: highlighting the selection option.

In addition to one or more of the features described herein, or as an alternative, further embodiments may include that identifying on the display that the object is pointing to the selection option further includes: broadening a border around the selection option.

In addition to one or more of the features described herein, or as an alternative, further embodiments may include that identifying on the display that the object is pointing to the selection option further includes: illuminating the selection option.

In addition to one or more of the features described herein, or as an alternative, further embodiments may include that identifying on the display that the object is pointing to the selection option further includes: adjusting a color of the selection option.

In addition to one or more of the features described herein, or as an alternative, further embodiments may include that the first two-dimensional sensor curtain is generated using a first plurality of sensor beams.

According to another embodiment, a touchless elevator communication system is provided. The touchless elevator communication system including: a first sensor curtain generation device configured to generate a first two-dimensional sensor curtain; a display located behind the two-dimensional sensor curtain, the display displays one or more selection options for control of an elevator system; a second sensor curtain generation device configured to generate a second two-dimensional sensor curtain, the second two-dimensional sensor curtain being located in front of the first two-dimensional sensor curtain, the first two-dimensional sensor curtain being located between the second two-dimensional sensor curtain and the display; a touchless system controller in electronic communication with at least one of the first sensor curtain generation device or the second sensor curtain generation device, the touchless system controller including: a processor; and a memory including computer-executable instructions that, when executed by the processor, cause the processor to perform operations, the operations including: generating a first two-dimensional sensor curtain using a first sensor curtain generation device, the first two-dimensional sensor curtain being located in front of a display that displays one or more selection options for control of the elevator system; generating a second two-dimensional sensor curtain using a second sensor curtain generation device, the second two-dimensional sensor curtain being located in front of the first two-dimensional sensor curtain, the first two-dimensional sensor curtain being located between the second two-dimensional sensor curtain and the display; detecting the object in the second two-dimensional sensor curtain; determining a second curtain location of the object in the second two-dimensional sensor curtain; mapping the second curtain location of the object in the second two-dimensional sensor curtain to a selection option of the one or more selection options; and identifying on the display that the object is pointing to the selection option.

In addition to one or more of the features described herein, or as an alternative, further embodiments may include that the operations further include: detecting the object in the first two-dimensional sensor curtain; determining a first curtain location of the object in the first two-dimensional sensor curtain; mapping the first curtain location of the object in the first two-dimensional sensor curtain to the selection option of the one or more selection options; confirming that the selection option is correct based on the first curtain location and the second curtain location being mapped to the selection option; and transmitting the selection option to a dispatcher of the elevator system, wherein the dispatcher is configured to command operation of an elevator car of the elevator system in accordance with the selection option.

In addition to one or more of the features described herein, or as an alternative, further embodiments may include moving the elevator car in accordance with the selection option.

In addition to one or more of the features described herein, or as an alternative, further embodiments may include that the operations further include: opening an elevator door of the elevator car in accordance with the selection option.

In addition to one or more of the features described herein, or as an alternative, further embodiments may include that the operations further include: closing an elevator door of the elevator car in accordance with the selection option.

In addition to one or more of the features described herein, or as an alternative, further embodiments may include that the operations further include: activating an alarm of the elevator system in accordance with the selection option.

According to another embodiment, a computer program product tangibly embodied on a non-transitory computer readable medium, the computer program product including instructions that, when executed by a processor, cause the processor to perform operations including: generating a first two-dimensional sensor curtain using a first sensor curtain generation device, the first two-dimensional sensor curtain being located in front of a display that displays one or more selection options for control of the elevator system; generating a second two-dimensional sensor curtain using a second sensor curtain generation device, the second two-dimensional sensor curtain being located in front of the first two-dimensional sensor curtain, the first two-dimensional sensor curtain being located between the second two-dimensional sensor curtain and the display; detecting the object in the second two-dimensional sensor curtain; determining a second curtain location of the object in the second two-dimensional sensor curtain; mapping the second curtain location of the object in the second two-dimensional sensor curtain to a selection option of the one or more selection options; and identifying on the display that the object is pointing to the selection option.

Technical effects of embodiments of the present disclosure include touchless communication an elevator system using one or more sensor planes in front of a display.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 illustrates a schematic view of an elevator call system used to generate elevator calls, in accordance with an embodiment of the disclosure;
FIG. 3 illustrates an exploded view of a touchless elevator communication system for use in the elevator call system of FIG. 2, in accordance with an embodiment of the disclosure;
FIG. 4 illustrates a side view of the touchless elevator communication system of FIG. 3, in accordance with an embodiment of the disclosure; and
FIG. 5 is a flow chart of a method of operating an elevator system using a touchless elevator communication system, in accordance with an embodiment of the disclosure.

### DETAILED DESCRIPTION

Elevator systems typically generate an elevator calls based on an individual manually entering an elevator call using a call button on a wall next to an elevator bank that requires the passenger touching the elevator call button. The spread of viruses, bacteria, and other pathogens has increased the desire to provide touchless systems wherever possible. The embodiments disclosed herein seek to provide a touchless elevator communication system that is both accurate and easy to use.

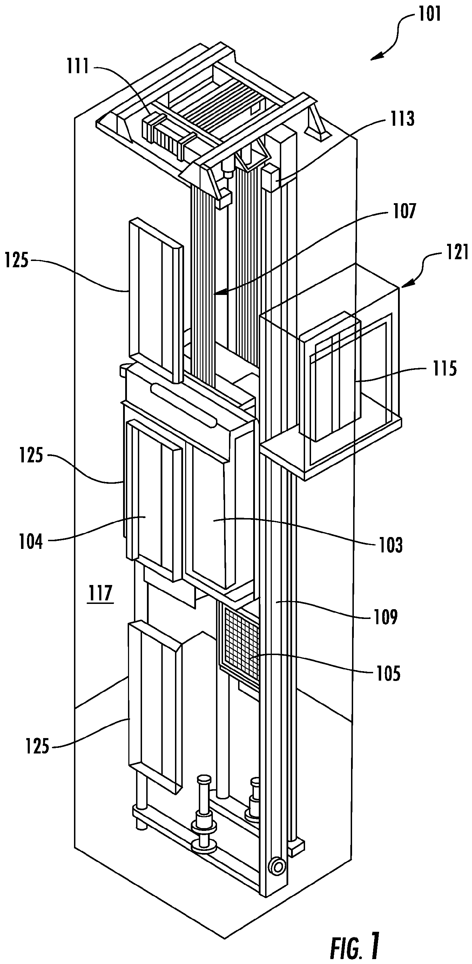

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor or pinched wheel propulsion to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system.

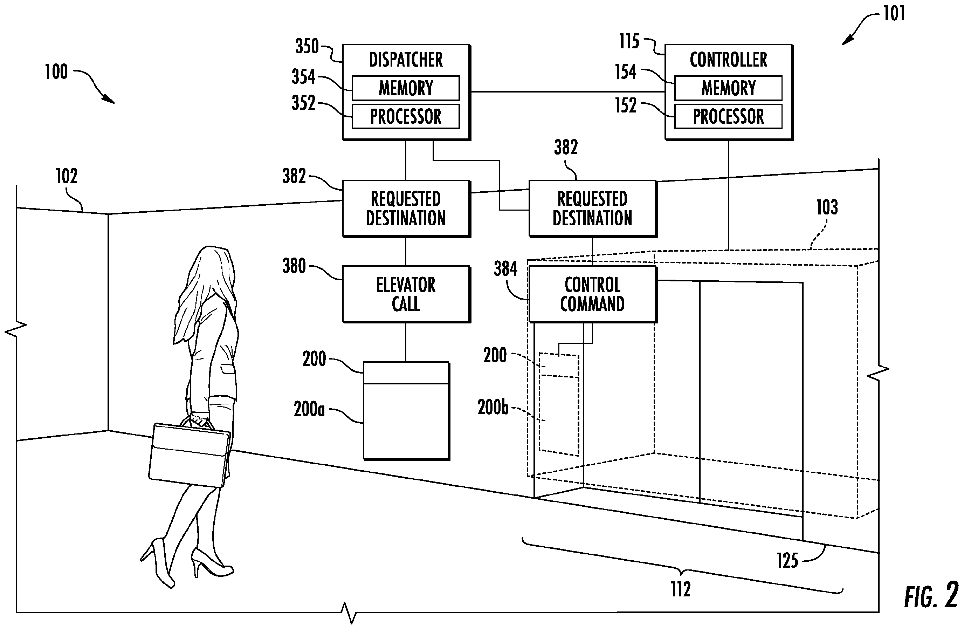

The elevator system 101 also includes one or more elevator doors 104. The elevator door 104 may be integrally attached to the elevator car 103. There may also be an additional elevator door 104 located on a landing 125 of the elevator system 101 (see FIG. 2).

Referring now to FIG. 2, with continued reference to FIG. 1, an elevator call system 100 is illustrated, in accordance with an embodiment of the present disclosure. It should be appreciated that, although particular systems are separately defined in the schematic block diagrams, each or any of the systems may be otherwise combined or separated via hardware and/or software.

As illustrated in FIG. 2, the elevator call system 100 may be located within a building 102 and may include one or more individual elevator systems 101 organized in elevator banks 112 on a landing(s) 125 (i.e., floor of the building 102). It is understood that while a single elevator system 101 is illustrated in a single elevator bank 112, the elevator bank 112 may comprise any number of elevator systems 101 and there may be one or more elevator banks 112. The elevator system 101 illustrated in FIG. 2 may be a single deck elevator system (e.g., one elevator car 103) or a double-deck elevator system (e.g., two stacked elevator cars 103). The elevator system 101 of FIG. 2 includes an elevator car 103. The elevator car 103 may serve any number of landings 125.

The elevator call system 100 may include a touchless elevator communication system 200, a dispatcher 350, and the elevator system 101. It should be appreciated that, although the dispatcher 350 is separately defined in the schematic block diagrams, the dispatcher 350 may be combined via hardware and/or software in the controller 115 of the elevator system 101 or any other device.

The touchless elevator communication system 200 may be an elevator call device 200a that is located outside of the elevator car 103 on the landing 125 in the building 102 proximate the elevator bank 112. The elevator call device 200a is configured to transmit an elevator call 380 to the dispatcher 350 as requested by the passenger 190. The elevator call 380 may be an up call or a down call. The touchless elevator communication system 200 may be an elevator call device 200a that is located outside of the elevator car 103 on the landing 125 in the building 102 proximate the elevator bank 112. The touchless elevator communication system 200 may be an elevator destination entry device 200b that is located inside of the elevator car 103. The elevator destination entry device 200 is configured to transmit a requested destination 382 for the elevator car 103 to the dispatcher 350 as requested by the passenger 190. The elevator call device 200a that is located outside of the elevator car 103 on the landing 125 in the building 102 proximate the elevator bank 112 may also serve as an elevator destination entry device that is configured to transmit a requested destination 382 for the elevator car 103 to the dispatcher 350 as requested by the passenger 190.

The touchless elevator communication system 200 may also be configured to generate a control command 384 for specific controls of the elevator system 101, such as, for example hold the elevator doors 104 open, close the elevator doors 104, activate an alarm on the elevator system 101, or any other elevator control command known to one of skill in the art.

The controller 115 is configured to control and coordinate operation of the elevator system 101. The controller 115 may be an electronic controller including a processor 152 and an associated memory 154 comprising computer-executable instructions that, when executed by the processor 152, cause the processor 152 to perform various operations. The processor 152 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 154 may be but is not limited to a random access memory (RAM), read only memory (ROM), or other electronic, optical, magnetic or any other computer readable medium.

The dispatcher 350 is configured to control and coordinate operation of one or more elevator systems 101 in one or more elevator banks 112. The dispatcher 350 may be an electronic controller including a processor 352 and an associated memory 354 comprising computer-executable instructions that, when executed by the processor 352, cause the processor 352 to perform various operations. The processor 352 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 354 may be but is not limited to a random access memory (RAM), read only memory (ROM), or other electronic, optical, magnetic or any other computer readable medium.

The controller 115 can be local, remote, or cloud based. The dispatcher 350 may be local, remote, or cloud based. The dispatcher 350 is in communication with the controller 115 of each elevator system 101. The dispatcher 350 may be a 'group' software that is configured to control the elevator system 101.

The dispatcher 350 is in communication with the touchless elevator communication system 200. The dispatcher 350 is configured to receive the elevator call 380, the control command 384, and/or the requested destination 382 transmitted from touchless elevator communication system 200. The dispatcher 350 is configured to manage the elevators calls 380, the control command 384, and/or the requested destinations 382 coming in from touchless elevator communication system 200 then command one or more elevator systems 101 to respond accordingly to the elevators calls 380, the control command 384, and/or the requested destinations 382.

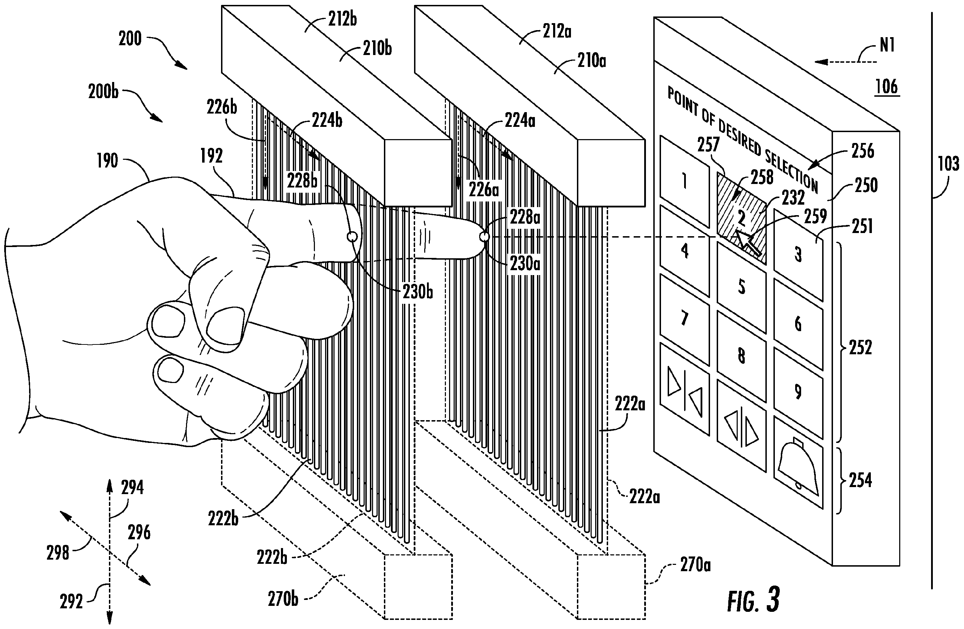

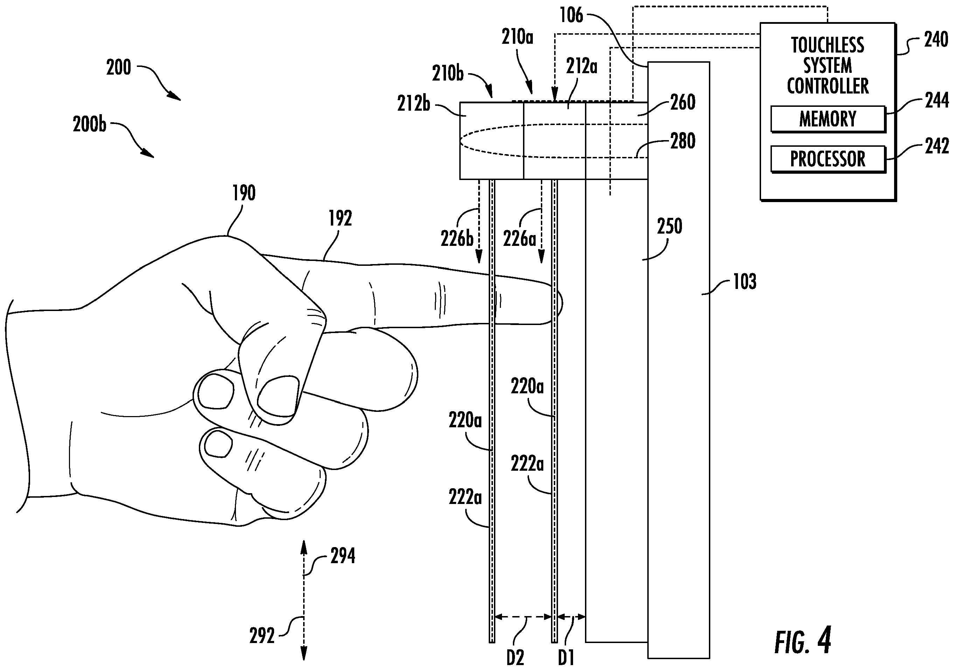

Referring now to FIGS. 3 and 4, with continued reference to FIGS 1 and 2, an exploded view of the touchless elevator communication system 200 is illustrated in FIG. 3 and a side view of the touchless elevator communication system 200 is illustrated in FIG. 4, in accordance with an embodiment of the disclosure. In FIG. 3, the touchless elevator communication system 200 is exploded in a direction that is normal N1 to an internal wall 106 of the elevator car 103. The touchless elevator communication system 200 discussed in relation to FIGS. 3 and 4 may be the elevator destination entry device 200b of FIG. 2. It is understood that while the touchless elevator communication system 200 discussed in relation to FIGS. 3 and 4 is mounted in the elevator car 103 as the elevator destination entry device 200b, the embodiments disclosed herein are also applicable to touchless elevator communication system 200 mounted outside of the elevator car 103 in an elevator lobby proximate an elevator bank 112, such as, for example, the elevator call device 200a of FIG. 2, or a remote elevator call device (e.g., security turnstile).

The touchless elevator communication system 200 includes a first touchless sensor 210a. The touchless elevator communication system 200 may also include a second touchless sensor 210b. While only the first touchless sensor 210a is required for touchless functionality, the second touchless sensor 210b may be added to increase accuracy of the touchless elevator communication system 200, as discussed further herein.

The touchless elevator communication system 200 includes a display 250 configured to display a plurality of selection options 251 for control of the elevator system 101. The selection options 251 will correlate with the elevator call 380, the control command 384, and/or the requested destination 382 of FIG. 2. When a passenger 190 selects a selection option 251, as discussed further herein, at least one of the elevator call 380, the control command 384, and/or the requested destination 382 of FIG. 2 will be generated.

The selection options 251 may include destination options 252 and elevator controls 254. The destination options 252 display floor numbers but may also be configured as an up arrow or a down arrow. The display 250 may be configured to display the destination options 252 for the passenger 190 to select and enter a requested destination 382. The display 250 may also be configured to display the elevator controls 254 for the passenger 190 to select and control the elevator car 103, such as, for example, a door open control, a door closed control, an alarm control, or any other elevator control known to one of skill in the art. The display 250 may be a static display, a dynamic display, or any combination thereof. A static display may include a sign, a sticker, a placard, a backlit sign, or any other similar display known to one of the skill in the art. A dynamic display be capable of changing what is on the display. A static display may include a computer display, an LCD display, an LED display, an OLED display, or any other similar display known to one of the skill in the art.

The display 250 is mounted to the internal wall 106 of the elevator car 103, an elevator lobby proximate an elevator bank 112, or a remote elevator call device (e.g., security turnstile). The display 250 is located between the first touchless sensor 210a and the internal wall 106. The first touchless sensor 210a is located between the second touchless sensor 210b and the display 250.

The first touchless sensor 210a includes a first sensor curtain generation device 212a configured to generate a first two-dimensional sensor curtain 220a using a first plurality of sensor beams 222a or a single sensor beam (not illustrated). The first sensor curtain generation device 212a may be a 2D reflected IR laser sensors, a beam break sensors utilizing visible or infrared lasers, a beam break utilizing visible or infrared light emitting diodes (LEDs), a time of flight sensor utilizing multiple static lasers, a time of flight sensor utilizing a single or multiple dynamic/scanning lasers, a time of flight sensor utilizing visible or infrared LEDs, a triangulation sensor using visible or infrared lasers, a time of flight sensor utilizing ultrasonic sound, a millimeter-wave radar sensor, or any other similar device known to one of skill in the art. The first sensor curtain generation device 212a may or may not require a reflective element 270a placed opposite the first sensor curtain generation device 212a. For example, a beam break sensors utilizing visible or infrared lasers and a beam break utilizing visible or infrared LED may require a reflective element 270a.

The first two-dimensional sensor curtain 220a may be planar and oriented about parallel with the display 250 and/or the internal wall 106 of the elevator car 103. The first two-dimensional sensor curtain 220a may generate the first two-dimensional sensor curtain 220a along a first x-axis 224a and a first y-axis 226a. The first y-axis 226a may be about perpendicular to the first x-axis 224a but does not need to be perpendicular.

The second touchless sensor 210b includes a second sensor curtain generation device 212b configured to generate a second two-dimensional sensor curtain 220b using a second plurality of sensor beams 222b or a single sensor beam (not illustrated). The second sensor curtain generation device 212b may be a 2D reflected IR laser sensors, a beam break sensors utilizing visible or infrared lasers, a beam break utilizing visible or infrared LEDs, a time of flight sensor utilizing multiple static lasers, a time of flight sensor utilizing a single or multiple dynamic/scanning lasers, a time of flight sensor utilizing visible or infrared LEDs, a triangulation sensor using visible or infrared lasers, a time of flight sensor utilizing ultrasonic sound, a millimeter-wave radar sensor, or any other similar device known to one of skill in the art. The second sensor curtain generation device 212b may or may not require a reflective element 270b placed opposite the second sensor curtain generation device 212b. For example, a beam break sensors utilizing visible or infrared lasers and a beam break utilizing visible or infrared LED may require a reflective element 270b.

The second two-dimensional sensor curtain 220b may be planar and oriented about parallel with the first two-dimensional sensor curtain 220a. The second two-dimensional sensor curtain 220b may be planar and oriented about parallel with the display 250 and/or the internal wall 106 of the elevator car 103. The second two-dimensional sensor curtain 220b may generated the second two-dimensional sensor curtain 220b long a second x-axis 224b and a second y-axis 226b. The second y-axis 226b may be about perpendicular to the second x-axis 224b but does not need to be perpendicular.

The first two-dimensional sensor curtain 220a may be in a facing spaced relationship with the display 250. The first two-dimensional sensor curtain 220a may be located a first distance D1 away from the display 250, as illustrated in FIG. 4. The second two-dimensional sensor curtain 220b may be in a facing spaced relationship with the first two-dimensional sensor curtain 220a. The second two-dimensional sensor curtain 220b may be located a second distance D2 away from the first two-dimensional sensor curtain 220a, as illustrated in FIG. 4.

The first sensor curtain generation device 212a may be attached to the internal wall 106 or to an attachment point 260 on the display 250 or adjacent to the display 250. The second sensor curtain generation device 212b may be attached to the first sensor curtain generation device 212a, as illustrated in FIG. 4. Alternatively, the first sensor curtain generation device 212a and the second sensor curtain generation device 212b may be attached to the internal wall 106 directly or via a bracket 280 or similar attachment mechanism known to one or skill in the art.

While the first sensor curtain generation device 212a is illustrated in FIGS. 3 and 4 as generating the first plurality of sensor beams 222a in a downward direction 292, the first sensor curtain generation device 212a may be configured to generate the first plurality of sensor beams 222a in any direction. For example, the first sensor curtain generation device 212a may be configured to generate the first plurality of sensor beams 222a in a downward direction 292, an upward direction 294 opposite the downward direction 292, a first sideways direction 296 perpendicular to the downward direction 292 and the upward direction 294, or a second sideways direction 298 opposite the first sideways direction 296.

While the second sensor curtain generation device 212b is illustrated in FIGS. 3 and 4 as generating the second plurality of sensor beams 222b in a downward direction 292, the second sensor curtain generation device 212b may be configured to generate the second plurality of sensor beams 222b in any direction. For example, the second sensor curtain generation device 212b may be configured to generate the second plurality of sensor beams 222b in a downward direction 292, an upward direction 294 opposite the downward direction 292, a first sideways direction 296 perpendicular to the downward direction 292 and the upward direction 294, or a second sideways direction 298 opposite the first sideways direction 296.

Additionally, the second sensor curtain generation device 212b may generate the second plurality of sensor beams 222b in the same direction as the first plurality of sensor beams 222a. In an alternate embodiment, the second sensor curtain generation device 212b may generate the second plurality of sensor beams 222b in a different direction as the first plurality of sensor beams 222a.

As illustrated in FIG. 4, the touchless elevator communication system 200 may include a touchless system controller 240 in electronic communication with the first touchless sensor 210a. The touchless system controller 240 is configured to control and coordinate operation of the touchless elevator communication system 200.

The touchless system controller 240 may be an electronic controller including a processor 242 and an associated memory 244 comprising computer-executable instructions that, when executed by the processor 242, cause the processor 242 to perform various operations. The processor 242 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 244 may be but is not limited to a random access memory (RAM), read only memory (ROM), or other electronic, optical, magnetic or any other computer readable medium.

The touchless system controller 240 may be configured to control operation of the first touchless sensor 210a. The first touchless sensor 210a is configured to detect when an object 192 projects into the first two-dimensional sensor curtain 220a. The first touchless sensor 210a may be configured to detect when an object 192 projects into the first two-dimensional sensor curtain 220a by detecting when at least one of the first plurality of sensor beams 222a is broken. The object 192 as illustrated may be a finger of the passenger 190 but it may be any object wielded by the passenger 190, such as, for example, an umbrella, a glove, a pen, a ruler, a pointer, an elbow, a foot, or any other object known to one of skill in the art.

When the object 192 projects into the first two-dimensional sensor curtain 220a, the first touchless sensor 210a is configured to determine a first x-coordinate 228a in the first x-axis 224a and a first y-coordinate 230a in the first y-axis 226a of the first two-dimensional sensor curtain 220a where the object 192 projected into the first two-dimensional sensor curtain 220a. The first x-coordinate 228a in the first x-axis 224a and the first y-coordinate 230a in the first y-axis 226a is mapped to a selection option 251 on the display 250. The selection option 251 may be directly behind the first x-coordinate 228a of first x-axis 224a and the first y-coordinate 230a in the first y-axis 226a, such that the passenger 190 is pointing to their desired selection option 251, as illustrated in FIG. 3. For example, the desired selection option 251 indicated by the first x-coordinate 228a and the first y-coordinate 230a is the second floor 232 in FIG. 3. Selection of the second floor 232 will transmit and requested destination 382 to the dispatcher 350 to move the elevator car 103 to the second floor.

The touchless system controller 240 may be in electronic communication with the second touchless sensor 210b. The touchless system controller 240 may be configured to control operation of the second touchless sensor 210b. The second touchless sensor 210b is configured to detect when an object 192 projects into the second two-dimensional sensor curtain 220b. The second touchless sensor 210b may be configured to detect when an object 192 projects into the second two-dimensional sensor curtain 220b by detecting when at least one of the second plurality of sensor beams 222b is broken.

It is understood that while one touchless system controller 240 that controls both the first touchless sensor 210a and the second touchless sensor 210b is described and illustrated herein, the embodiment described herein are also applicable to the first touchless sensor 210 and the second touchless sensor 210 have a dedicated touchless system controller 240 of their own.

When the object 192 projects into the second two-dimensional sensor curtain 220b, the second touchless sensor 210b is configured to determine a second x-coordinate 228b in the second x-axis 224b and a second y-coordinate 230b in the second y-axis 226b of the second two-dimensional sensor curtain 220b where the object 192 projected into the second two-dimensional sensor curtain 220b. The second x-coordinate 228b in the second x-axis 224b and the second y-coordinate 230b in the second y-axis 226b is mapped to a selection option 251 on the display 250. The selection option 251 may be directly behind the second x-coordinate 228b of second x-axis 224b and the second y-coordinate 230b in the second y-axis 226b, such that the passenger 190 is pointing to their desired selection option 251. For example, the desired selection option 251 indicated by the second x-coordinate 228b and the second y-coordinate 230b is the second floor 232, as illustrated in FIG. 3. Selection of the second floor 232 will transmit and requested destination 382 to the dispatcher 350 to move the elevator car 103 to the second floor.

As mentioned above, while only the first touchless sensor 210a is required for touchless functionality, the second touchless sensor 210b provides additional functionality and benefits. For example, the first touchless sensor 210a may be used to confirm the selection option 251 mapped by the second touchless sensor 210b or the second touchless sensor 210b may be used to confirm the selection option 251 mapped by the first touchless sensor 210.

Alternatively, the second touchless sensor 210 may be utilized to trigger the display 250 to highlight the selection option 251 mapped by the second touchless sensor 210b to show where the passenger 190 is pointing and then the first touchless sensor 210a may be used to confirm the selection option 251 mapped as the individual moves the object 192 closer to the display 250. The selection option 251 may be highlighted by boldening a border 257 around the selection option 251 that the passenger 180 is pointing at, illuminating a background 258 of the selection option 251 that the passenger 180 is pointing at, or coloring a background 258 of the selection option 251 that the passenger 180 is pointing at different than the other selection options 251, as illustrated in FIG. 2.

Alternatively, the second touchless sensor 210 may be utilized to trigger the display 250 to display a curser 259 mapped by the second touchless sensor 210b to show what selection option 251 the passenger 190 is pointing at and then the first touchless sensor 210a may be used to confirm the selection option 251 mapped as the individual moves the object 192 closer to the display 250.

The touchless system controller 240 may be in electronic communication with the display 250. The touchless system controller 240 may be configured to control operation of the display 250.

The display 250 may display instruction 256 to the passenger 190. For example, the display instructions 256 may state, "point to desired selection". The display instructions 256 may adjusted based on the location of the object 192 relative to the first two-dimensional sensor curtain 220a and the second two-dimensional sensor curtain 220b. For example, if the object 192 is detected to project through the second two-dimensional sensor curtain 220b has not yet touched the first two-dimensional sensor curtain 220a, the display instruction 256 may state "move closer to confirm selection" to prompt the passenger 190 to break the first two-dimensional sensor curtain 220a with the object 192 to confirm their selection from the second two-dimensional sensor curtain 220b.

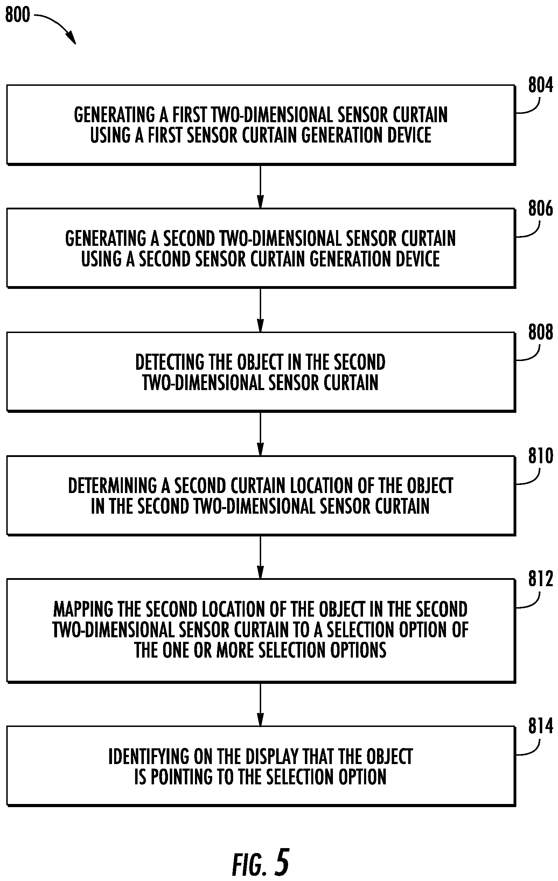

Referring now to FIG. 5, with continued reference to FIGS 1-4, a flow chart of a method 800 of operating an elevator system 101 using a touchless elevator communication system 200 is illustrated, in accordance with an embodiment of the disclosure. In an embodiment, the method 800 is performed by the touchless elevator communication system 200 and/or the elevator call system 100. More specifically, the method 800 may be performed by the touchless system controller 240.

At block 804, a first two-dimensional sensor curtain 220a is generated using a first sensor curtain generation device 212a. The first two-dimensional sensor curtain 220a being located in front of a display 250 that display 250s one or more selection options 251 for control of the elevator system 101. The first two-dimensional sensor curtain 220a may be generated using a first plurality of sensor beams 222a.

At block 806, a second two-dimensional sensor curtain 220b is generated using a second sensor curtain generation device 212b. The second two-dimensional sensor curtain 220b being located in front of the first two-dimensional sensor curtain 220a. The first two-dimensional sensor curtain 220a being located between the second two-dimensional sensor curtain 220b and the display 250.

A block 808 the object 192 is detected in the second two-dimensional sensor curtain 220b. At block 810, a second curtain location of the object 192 in the second two-dimensional sensor curtain 220b is determined. The second curtain location of the object 192 may include a second x-coordinate 228b in the second x-axis 224b and a second y-coordinate 230b in the second y-axis 226b of the second two-dimensional sensor curtain 220b.

At block 812, the second curtain location of the object 192 in the second two-dimensional sensor curtain 220b is be mapped to a selection option 251 of the one or more selection options 251.

At block 814, it is identified on the display 250 that the object 192 is pointing to the selection option 251.

The method 800 may further include that an object 192 is detected in the first two-dimensional sensor curtain 220a. The object 192 may be detected by detecting a break in the first plurality of sensor beams 222a. The first curtain location of the object 192 is determined in the first two-dimensional sensor curtain 220a. The first curtain location of the object 192 may include a first x-coordinate 228a in the first x-axis 224a and a first y-coordinate 230a in the first y-axis 226a of the first two-dimensional sensor curtain 220a. The first curtain location of the object 192 in the first two-dimensional sensor curtain 220a is mapped to a selection option 251 of the one or more selection options 251. It may be confirmed that the selection option 251 is correct based on the first curtain location and the second curtain location being mapped to the selection option 251.

The method 800 may further include that the selection option 251 is transmitted to a dispatcher 350 of the elevator system 101. The dispatcher 350 is configured to command operation of an elevator car 103 of the elevator system 101 in accordance with the selection option 251, which may include moving the elevator car 103 in accordance with the selection option 251, opening an elevator door 104 of the elevator car 103 in accordance with the selection option 251, closing an elevator door 104 of the elevator car 103 in accordance with the selection option 251, and/or activating an alarm of the elevator system 101 in accordance with the selection option 251.

The method 800 may further include that prior to detecting the object 192 in the first two-dimensional sensor curtain 220a a passenger 190 is instructed to move the object 192 closer to the display 250 and through the first two-dimensional sensor curtain 220a. The passenger 190 may be instructed via a message display on the display 250 as instructions 256. The passenger 190 may also be instructed via a voice command through a speaker (not shown) of the display 250 or elevator car 103.

In block 814, it is identified on the display 250 that the object 192 is pointing to the selection option 251 by placing a curser 259 on the selection option 251, highlighting the selection option 251, broadening a border 257 around the selection option 251, illuminating the selection option 251, and/or adjusting a color of the selection option 251.

While the above description has described the flow process of FIG. 5 in a particular order, it should be appreciated that unless otherwise specifically required in the attached claims that the ordering of the steps may be varied.

As described above, embodiments can be in the form of processor-implemented processes and devices for practicing those processes, such as processor. Embodiments can also be in the form of computer program code (e.g., computer program product) containing instructions embodied in tangible media (e.g., non-transitory computer readable medium), such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method of operating an elevator system using a touchless elevator communication system, the method comprising:
generating a first two-dimensional sensor curtain using a first sensor curtain generation device, the first two-dimensional sensor curtain being located in front of a display that displays one or more selection options for control of the elevator system;
generating a second two-dimensional sensor curtain using a second sensor curtain generation device, the second two-dimensional sensor curtain being located in front of the first two-dimensional sensor curtain, the first two-dimensional sensor curtain being located between the second two-dimensional sensor curtain and the display;
detecting the object in the second two-dimensional sensor curtain;
determining a second curtain location of the object in the second two-dimensional sensor curtain;
mapping the second curtain location of the object in the second two-dimensional sensor curtain to a selection option of the one or more selection options; and
identifying on the display that the object is pointing to the selection option.

2. The method of claim 1, further comprising:
detecting the object in the first two-dimensional sensor curtain;
determining a first curtain location of the object in the first two-dimensional sensor curtain;
mapping the first curtain location of the object in the first two-dimensional sensor curtain to the selection option of the one or more selection options;
confirming that the selection option is correct based on the first curtain location and the second curtain location being mapped to the selection option; and
transmitting the selection option to a dispatcher of the elevator system, wherein the dispatcher is configured to command operation of an elevator car of the elevator system in accordance with the selection option.

3. The method of claim 2, further comprising:
moving the elevator car in accordance with the selection option.

4. The method of claim 2 or 3, further comprising:
opening an elevator door of the elevator car in accordance with the selection option.

5. The method of any of claims 2 to 4, further comprising:
closing an elevator door of the elevator car in accordance with the selection option.

6. The method of any of claims 2 to 5, further comprising:
activating an alarm of the elevator system in accordance with the selection option.

7. The method of any of claims 2 to 6, wherein prior to detecting the object in the first two-dimensional sensor curtain, the method further comprises:
instructing a passenger to move the object closer to the display and through the first two-dimensional sensor curtain.

8. The method of any preceding claim, wherein identifying on the display that the object is pointing to the selection option further comprises:
placing a curser on the selection option.

9. The method of any preceding claim, wherein identifying on the display that the object is pointing to the selection option further comprises:
highlighting the selection option.

10. The method of any preceding claim, wherein identifying on the display that the object is pointing to the selection option further comprises:
broadening a border around the selection option.

11. The method of any preceding claim, wherein identifying on the display that the object is pointing to the selection option further comprises:
illuminating the selection option.

12. The method of any preceding claim, wherein identifying on the display that the object is pointing to the selection option further comprises:
adjusting a color of the selection option.

13. The method of any preceding claim, wherein the first two-dimensional sensor curtain is generated using a first plurality of sensor beams.

14. A touchless elevator communication system, the touchless elevator communication system comprising:
a first sensor curtain generation device configured to generate a first two-dimensional sensor curtain;
a display located behind the two-dimensional sensor curtain, the display displays one or more selection options for control of an elevator system;
a second sensor curtain generation device configured to generate a second two-dimensional sensor curtain, the second two-dimensional sensor curtain being located in front of the first two-dimensional sensor curtain, the first two-dimensional sensor curtain being located between the second two-dimensional sensor curtain and the display;
a touchless system controller in electronic communication with at least one of the first sensor curtain generation device or the second sensor curtain generation device, the touchless system controller comprising:
a processor; and
a memory comprising computer-executable instructions that, when executed by the processor, cause the processor to perform operations, the operations comprising:
generating a first two-dimensional sensor curtain using a first sensor curtain generation device, the first two-dimensional sensor curtain being located in front of a display that displays one or more selection options for control of the elevator system;
generating a second two-dimensional sensor curtain using a second sensor curtain generation device, the second two-dimensional sensor curtain being located in front of the first two-dimensional sensor curtain, the first two-dimensional sensor curtain being located between the second two-dimensional sensor curtain and the display;
detecting the object in the second two-dimensional sensor curtain;
determining a second curtain location of the object in the second two-dimensional sensor curtain;
mapping the second curtain location of the object in the second two-dimensional sensor curtain to a selection option of the one or more selection options; and
identifying on the display that the object is pointing to the selection option.

15. A computer program product tangibly embodied on a non-transitory computer readable medium, the computer program product including instructions that, when executed by a processor, cause the processor to perform operations comprising:
generating a first two-dimensional sensor curtain using a first sensor curtain generation device, the first two-dimensional sensor curtain being located in front of a display that displays one or more selection options for control of the elevator system;
generating a second two-dimensional sensor curtain using a second sensor curtain generation device, the second two-dimensional sensor curtain being located in front of the first two-dimensional sensor curtain, the first two-dimensional sensor curtain being located between the second two-dimensional sensor curtain and the display;
detecting the object in the second two-dimensional sensor curtain;
determining a second curtain location of the object in the second two-dimensional sensor curtain;
mapping the second curtain location of the object in the second two-dimensional sensor curtain to a selection option of the one or more selection options; and identifying on the display that the object is pointing to the selection option.
